# EUROPEAN PATENT SPECIFICATION

(11) **EP 2 061 644 B1**
(45) Date of publication and mention of the grant of the patent: **26.10.2011**
(21) Application number: 07789385.7
(22) Date of filing: 29.08.2007
(51) Int. Cl.: B29C 70/62

(54) **METHOD OF MANUFACTURING COMPOSITE MATERIAL BY GROWING OF A LAYER OF REINFORCEMENT AND RELATED APPARATUS**
VERFAHREN ZUR HERSTELLUNG VON VERBUNDMATERIAL DURCH AUFWACHSEN EINER VERSTÄRKUNGSSCHICHT UND VERWANDTE VORRICHTUNG
PROCÉDÉ DE PRODUCTION D'UN MATÉRIAU COMPOSITE PAR CROISSANCE D'UN PLI DE RENFORT ET APPAREIL UTILISÉ POUR CELA

(30) Priority: 05.09.2006 GB 0617460; 05.09.2006 US 824565 P
(43) Date of publication of application: 27.05.2009
(73) Proprietor: Airbus Operations Limited, Bristol BS99 7AR (GB)
(72) Inventor: FARMER, Benjamin, Lionel, Bristol BS99 7AR (GB); JOHNS, Daniel, Mark, Bristol BS99 7AR (GB)
(74) Representative: Ribeiro, James Michael
(86) International application number: PCT/GB2007/050510
(87) International publication number: WO 2008/029179

(56) References cited:
- EP-A- 1 059 266
- US-A- 4 560 603
- US-A1- 2003 111 333
- US-A1- 2003 131 932
- US-A1- 2004 071 951
- US-A1- 2005 061 496
- US-A1- 2005 167 647
- FAN S ET AL: "SELF-ORIENTED REGULAR ARRAYS OF CARBON NANOTUBES AND THEIR FIELD EMISSION PROPERTIES" 22 January 1999 (1999-01-22), SCIENCE, AMERICAN ASSOCIATION FOR THE ADVANCEMENT OF SCIENCE,, US, PAGE(S) 512-514 , XP000930011 ISSN: 0036-8075 figure 3
- R.T.K. BAKER, M.A. BARBER, P.S. HARRIS, F.S. FEATES, R.J. WAITE: "Nucleation and Growth of Carbon Deposits from the Nickel Catalyzed Decomposition of Acetylene" JOURNAL OF CATALYSIS, vol. 26, 1972, pages 51-62, XP002458839 cited in the application

## Description

### FIELD OF THE INVENTION

The present invention relates to a method of manufacturing a composite material.

### BACKGROUND OF THE INVENTION

Nanocomposites based on carbon nanotubes are described in E. T. Thostenson and T-W. Chou, "Aligned Multi-Walled Carbon Nanotube-Reinforced Composites: Processing and Mechanical Characterization," Journal of Physics D: Applied Physics, 35(16) L77-L80 (2002). According to this paper, one of the most significant challenges towards improving the properties of the nanocomposite is to obtain a uniform dispersion of nanotubes within the polymer matrix. The solution presented in this paper is a micro-scale twin-screw extruder.

US2005/0167647 describes a thermal interface material which includes a macromolecular material and a plurality of carbon nanotubes embedded in the macromolecular material uniformly. The thermal interface material includes a first surface and an opposite second surface. Each carbon nanotube is fixed to a substrate at one end and extends from the first surface to the second surface of the thermal interface material to optimise the thermal interface properties of the material.

US4560603 describes a composite material manufacturing process and resulting structure. The composite material includes high strength material whiskers having a characteristic orientation when placed in an electromagnetic field.

US2005/0061496 describes a thermal interface material in which carbon nanotubes are combines with an alignment material. The alignment material is aligned, which causes the carbon nanotubes to become aligned and efficiently conduct heat.

US2003/0111333 describes a method and apparatus for producing aligned carbon nanotube thermal interface structures using batch and continuous manufacturing processes. In a batch process, a capacitor is immersed in a bath containing a slurry of thermoplastic polymer containing randomly oriented carbon nanotubes and energised to create an electric field to orient the nanotubes prior to curing. In a continuous process, slurry carried by a conveyor receives the nanotube aligning electric field from capacitors positioned on both sides of the conveyor bearing the slurry.

### SUMMARY OF THE INVENTION

A first aspect of the invention provides a method of manufacturing a composite material, the method comprising:
growing a layer of reinforcement;
impregnating the layer with a matrix; and
aligning the reinforcement layer by applying an electromagnetic field during growth of the reinforcement layer.

Typically the field is applied at an angle to the reinforcement layer, either perpendicular or at an acute angle.

Growth of the reinforcement layers may be enhanced by forming a plasma during growth of the layer. This enables growth to be carried out at lower temperatures, typically in the range of 25-500°C.

A further aspect of the invention provides a method of manufacturing a composite material, the method comprising:
growing a layer of reinforcement;
impregnating the layer with a matrix; and
forming a layer of catalyst particles to catalyse the growth of the reinforcement layer, the layer of catalyst particles having a catalyst particle packing density which varies across the layer.

A further aspect of the invention provides a method of manufacturing a composite material, the method comprising:
growing a layer of reinforcement;
impregnating the layer with a matrix; and
forming a layer of catalyst particles to catalyse the growth of the reinforcement layers by spraying droplets of liquid onto a surface, the liquid containing the catalyst particles in suspension or solution.

A further aspect of the invention provides a method of manufacturing a composite material, the method comprising:
growing a layer of reinforcement with a packing density which varies across the layer; and
impregnating the layer with a matrix.

A further aspect of the invention provides a method of manufacturing a composite material, the method comprising:
manufacturing two or more sheets of composite material, each sheet being manufactured by growing a layer of reinforcement; and impregnating the layer with a matrix;
laying the sheets together to form a laminate structure; and
moulding the laminate structure.

This aspect of the invention may be used to form sheets (either single layer or multi-layer) which are processed in a similar manner to a conventional "prepreg", that is by laying the sheets together to form a laminate structure; and moulding the laminate structure to form a composite element.

A further aspect of the invention provides apparatus for manufacturing a composite material, the apparatus comprising:
a system for growing a layer of reinforcement;
an electrode for applying an electromagnetic field to the layer; and
an impregnation system for applying matrix material to the layer so as to impregnate each layer with the matrix material.

A further aspect of the invention provides apparatus for manufacturing a composite material, the apparatus comprising:
a system for growing a layer of reinforcement in-situ;
means for forming a layer of catalyst particles to catalyse the growth of the reinforcement layers with a catalyst particle packing density which varies across the layer; and
an impregnation system for applying matrix material to the layer so as to impregnate each layer with the matrix material.

A further aspect of the invention provides apparatus for manufacturing a composite material, the apparatus comprising:
a system for growing a layer of reinforcement with a packing density which varies across the layer; and
an impregnation system for applying matrix material to the layer so as to impregnate the layer with the matrix material.

A further aspect of the invention provides apparatus for manufacturing a composite material, the apparatus comprising:
a system for growing a layer of reinforcement in-situ;
a printing head for forming a layer of catalyst particles to catalyse the growth of the reinforcement layer by spraying droplets of liquid onto a surface from a printing orifice, the liquid containing the catalyst material in suspension or solution; and
an impregnation system for applying matrix material to the layer so as to impregnate the layer with the matrix material.

The following statements apply to all aspects of the invention.

The layer of reinforcement may be grown in-situ by an arc discharge process, in which stock material contained in a negative electrode sublimates because of the high temperatures caused by the discharge. Alternatively the layer of reinforcement may be grown in-situ by a laser ablation process, in which a pulsed laser vaporizes a target in a high temperature reactor while an inert gas is bled into a process chamber. The reinforcement layer develops on the cooler surfaces of the reactor, as the vaporized material condenses. In the case of arc discharge or laser ablation, the elements (such as carbon nanotubes) making up the reinforcement layer are formed in a gaseous state, and in-situ growth of the layer occurs by condensation of the elements on a substrate. However a problem with such arc discharge and laser ablation processes is that they are not suited to high volume production, and tend to require high temperatures. Therefore preferably the method further comprises forming a layer of catalyst particles to catalyse the growth of the reinforcement, for instance as part of a chemical vapour deposition process. This enables growth to be carried out at lower temperatures, typically in the range of 25-500°C. In this case the layer grows by in-situ growth of the elements making up the reinforcement layer, instead of growing by accumulation of pre-formed elements.

The catalyst particles may be deposited directly, through the precipitation of metal salts held in solution in water, oil or alcohol, or they may be deposited as a colloid suspension, for instance from a printing head.

Typically the method further comprises heating the matrix during impregnation, using a laser or other heat source. The matrix material is typically deposited as a layer, for instance a powder layer which is heated in-situ to impregnate the reinforcement.

Impregnation typically occurs by a process of capillary action.

The matrix may be thermoplastic or thermosetting.

The matrix may be a metal such as Titanium, or a polymer such as a thermosetting resin or a thermoplastic material such as polyetheretherketone (PEEK).

The reinforcement layer typically comprises reinforcement elements having an elongate structure such as tubes, fibres or plates. The reinforcement elements may be solid or tubular. For instance the reinforcement elements may be single walled carbon nanotubes; multi-walled carbon nanotubes; or carbon nanotubes coated with a layer of amorphous carbon.

Preferably the reinforcement layer comprises reinforcement elements having an aspect ratio greater than 100.

Preferably the reinforcement layer comprises reinforcement elements having a diameter less than 100 nm.

The reinforcement may be formed of any material such as silicon carbide or alumina, but preferably the reinforcement layer comprises carbon fibres. This is preferred due to the strength and stiffness of the carbon-carbon bond.

The method may be used to form an engineering structure in which a series of two or more layers is formed, or may be used to form a sheet or film with only a single layer of reinforcement.

### BRIEF DESCRIPTION OF THE DRAWINGS

Embodiments of the invention will now be described with reference to the accompanying drawings, in which:
Figures 1-10 show various steps in the manufacture of a multi-layer thermoplastic matrix composite material;
Figures 11-13 show various steps in the manufacture of a thin film thermoplastic matrix composite material; and
Figures 14-20 show various steps in the manufacture of a thermosetting matrix composite material.

### DETAILED DESCRIPTION OF EMBODIMENT(S)

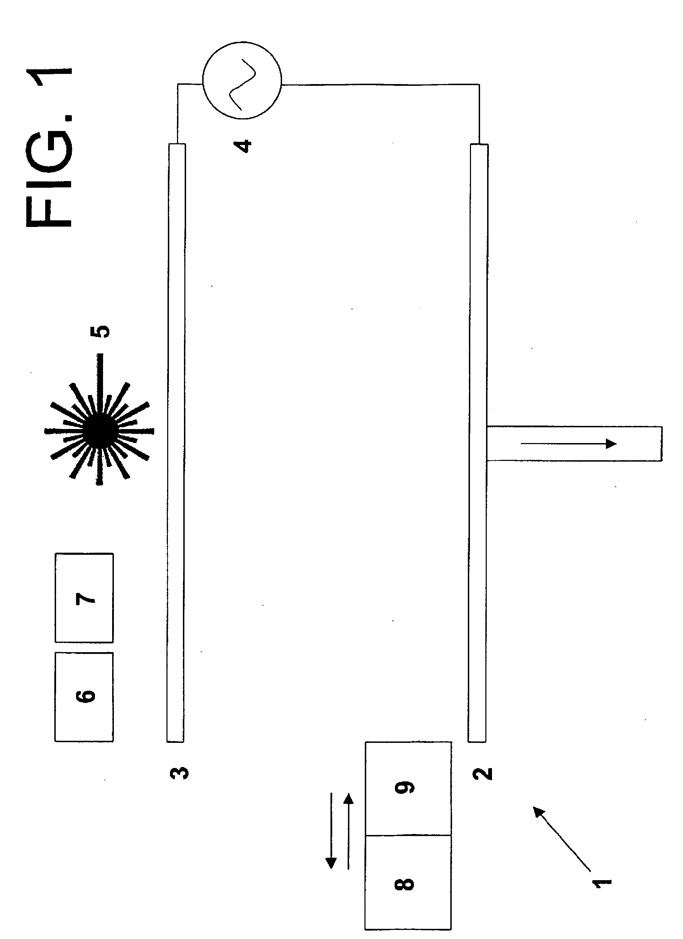

The apparatus 1 shown in Figure 1 is housed within a process chamber (not shown). A negative plasma source electrode 2 and a positive plasma source electrode 3 are connected by a power source 4. A laser 5 is positioned above the positive plasma source 3, and is associated with a raster scanning mechanism (not shown). A gas supply 6 can be turned on and off to supply a pre-heated process gas to the chamber, such as CH₄/H₂. A second gas supply 7 can be turned on and off to supply an inert gas such as N₂ to the process chamber. The inert gas is preheated to a temperature at or just below the melting point of the matrix material. The electrode 2 is also heated by a heating element (not shown) to a similar temperature.

A heated hopper 8 and a cooled ink-jet printing head 9 are mounted on a transport mechanism (not shown) which can move the hopper 8 and printing head 9 from left to right in Figure 1 (that is, from one end of the negative plasma source 2 to the other). A transport mechanism (not shown) is provided for driving the negative plasma source 2 up and down. Figures 1-10 are side views of the apparatus, and thus do not show the third (width) dimension out of the plane of the figures. However, the electrodes 2,3, laser 5, hopper 8 and printing head 9 will extend across the width of the apparatus.

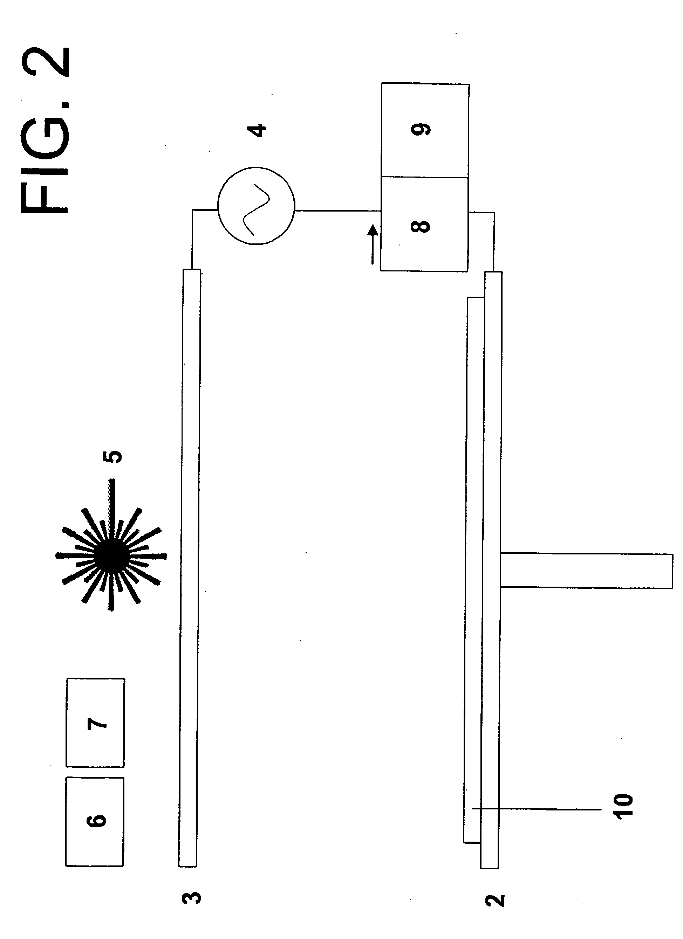

In a first process step shown in Figure 2, the hopper (8) is filled with a polymer powder such as polyetheretherketone (PEEK). The hopper 8 is moved across the negative plasma source 2, and a dispensing orifice (not shown) in the hopper 8 is opened to deposit a layer 10 of polymer powder. Thus the source 2 also acts as a bed or platform for the additive layer manufacturing process. The orifice is then closed. The inert gas prevents oxidation of the polymer. The laser 5 is turned on and the raster mechanism scans the beam across the layer 10 to consolidate the layer 10. The heating effect of the laser beam causes the polymer layer 10 to melt. A shutter (not shown) in the path of the laser beam is opened and closed selectively to modulate the beam as it is scanned over the layer 10. Thus the layer 10 is consolidated only in the areas required to form a desired shape. More specifically, the shutter is opened and closed in accordance with a computer-aided design (CAD) model which defines a series of slices through the desired three-dimensional shape.

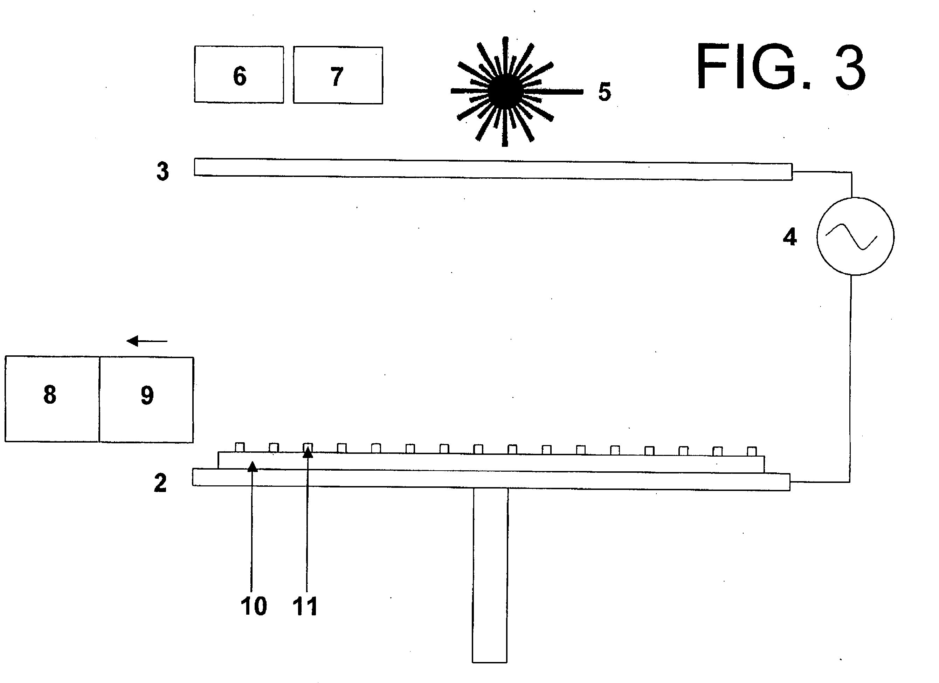

In a second process step shown in Figure 3, the printing head 9 is moved across the layer 10 to deposit an array of catalyst particles 11. The printing head 9 sprays an array of colloid drops onto the layer 10, and as the colloid evaporates in the high temperature inert gas environment, metal catalyst particles 11 suspended in the colloid drops are deposited. The catalyst particles 11 may be, for example a metal, preferably transition metals Fe, Ni or Co, or alloys thereof; and the colloid liquid may be, for example alcohol, water, oil, or a mixture thereof. A fluid-based cooling system (not shown) cools the printing head 9 and a reservoir (not shown) containing the printing fluid to prevent the colloid liquid from boiling before it is printed. The printing orifice of the printing head 9 (which emits the spray of droplets) is positioned sufficiently close to the layer 10 to ensure that the colloid liquid does not evaporate deleteriously in flight, before hitting the layer 10.

Although the catalyst particles 11 are shown in Figure 3 for purposes of illustration with a regular spacing along the length of the layer 10, the spacing between the particles will be essentially random in both the length and width dimensions.

The diameter of each catalyst particle is typically in the range of 1 nm-1 µm, and the catalyst particles may be close-packed, or spaced apart.

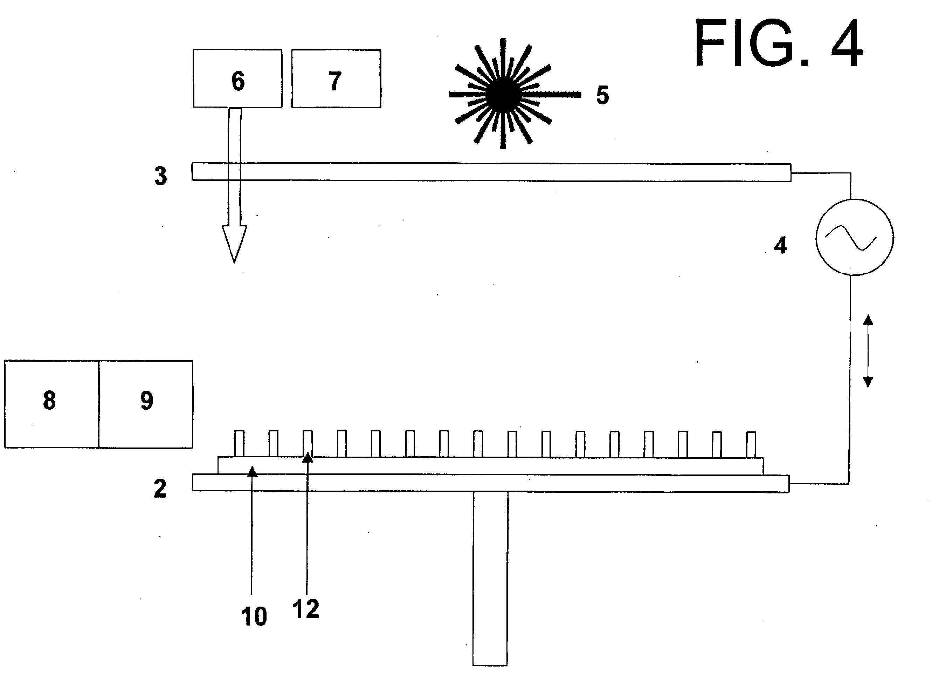

In a third process step shown in Figure 4, the carbonaceous feed stock is introduced from the gas supply 6 and the power source 4 is turned on to generate a plasma between the electrodes 2, 3. This causes the in-situ growth of a layer of nanofibres 12, aligned with the direction of the electromagnetic field between the electrodes 2,3. The growth mechanism is as described by Baker (Baker, R.T.K., Barber, M.A., Harris, P.S., Feates, F.S. & Waire, R.J. J J Catal 26 (1972). It is generally accepted that the carbonaceous gas is dissociated on the surface of the metal catalyst particle and carbon is adsorbed onto the surface where it is then transported by diffusion to the precipitating face forming a carbon filament with the catalyst particle at the tip. Discussion is ongoing with regards to whether this diffusion is through the bulk of the catalyst or along its surface(s) and to whether the diffusion is driven by a carbon concentration or thermal gradient. Thus when the growth process is complete, a "forest" of nanofibres 12 is produced, each nanofibre 12 carrying a catalyst particle 11 at its tip.

The catalyst particles and plasma enable the nanofibre growth to occur at a relatively low temperature, lower than the melting point of the matrix.

The diameter of the nanofibres is typically in the range of 1 nm-1 µm. Thus, although described as "nanofibres", the diameter of the fibres 12 may exceed 100 nm if desired.

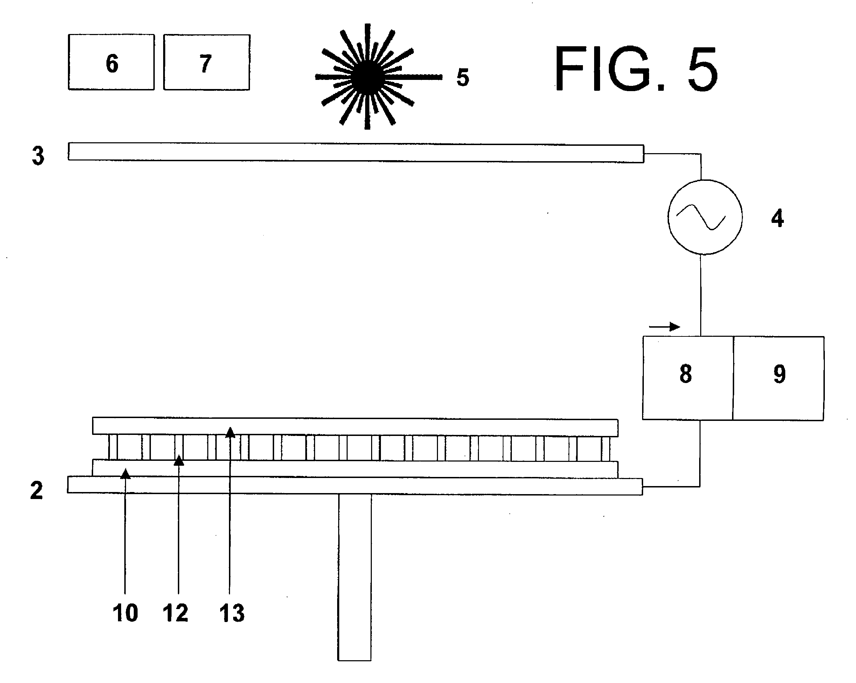

Once nanofibres 12 of a suitable length have been grown, the plasma power source 4 and gas supply 6 are turned off, the inert gas is purged, and in a fourth process step shown in Figure 5, the platform 2 is lowered and the hopper 8 is moved along the layer of nanofibres 12 to deposit a further layer 13 of polymer powder. The polymer powder size is typically three orders of magnitude larger than the diameter of the nanofibres 12 and significantly greater than the spaces between the nanofibres 12. As a result, the polymer powder layer 13 sits on top of the layer of nanofibres 12 as shown in Figure 5. The layer 13 has a thickness which is some multiple of the polymer powder size of 20-50 µm - typically of the order of 0.2-0.5 mm.

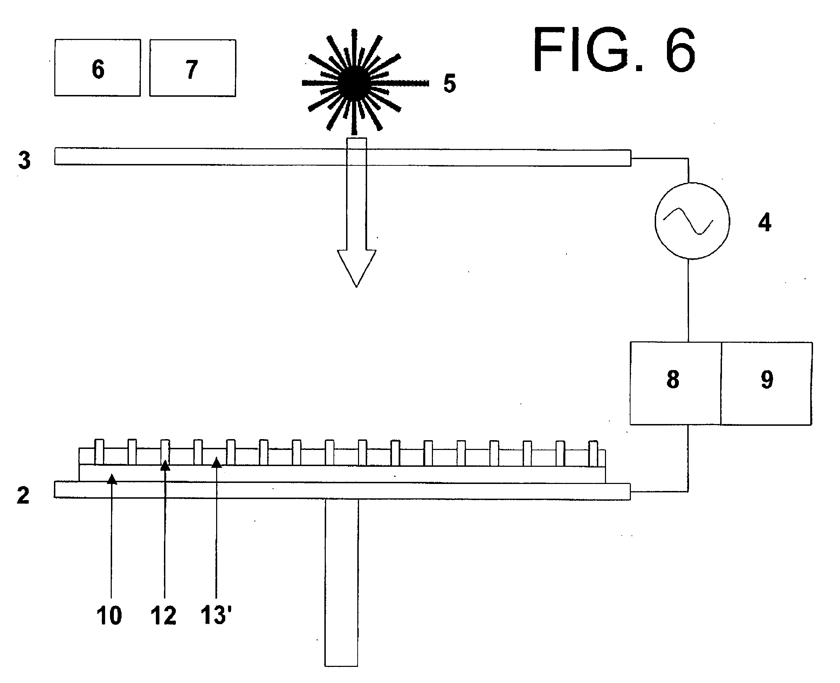

In a fifth process step shown in Figure 6, the laser 5 is turned on and the raster mechanism scans the beam across the layer 13 to form a consolidated layer 13'. During the raster scan, the shutter is opened and closed as required to form the consolidated layer 13' in a desired shape.

The thickness of the unconsolidated polymer layer 13 is selected so that the layer of nanofibres 12 is only partially impregnated with the matrix through a lower part of its thickness, leaving an upper part of the layer of nanofibres 12 exposed as shown in Figure 6. By way of example, the thickness of the unconsolidated layer 13 shown in Figure 5 may be in the range of 0.2-0.5 mm, and the thickness of the consolidated layer 13' shown in Figure 6 may be in the range of 0.1-0.25 mm. Thus in this case the nanofibres 12, being slightly longer than the layer of consolidated matrix 13', will have lengths exceeding 0.1 mm and aspect ratios exceeding 100. Although the ratio between the length of the fibres 12 and the thickness of the consolidated layer 13' is of the order of 2:1 in Figure 6, this is for illustrative purposes only and in practice a much smaller degree of overlap (for instance a ratio of 1.05:1) will be required to give significant interlayer reinforcement.

The laser is then turned off and the five process steps shown in Figures 2-6 are repeated to build up a series of layers of nanofibres; each layer being impregnated with a matrix before depositing the next layer.

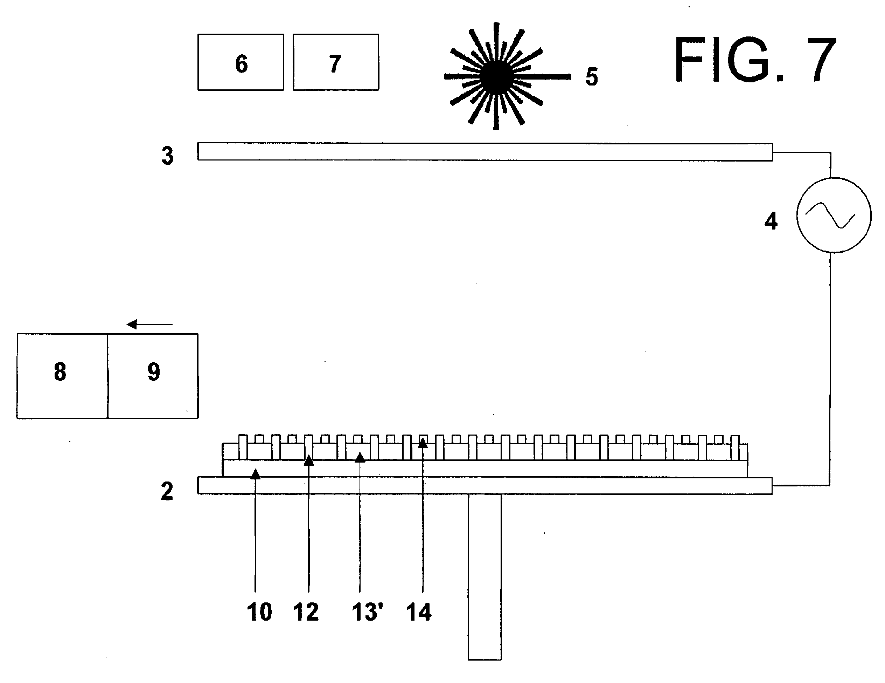

Thus in the first repeat, a second layer of catalyst particles 14 is deposited as shown in Figure 7. In Figure 7 the catalyst particles 14 are shown in a regular array, interleaved with the array of nanofibres 12. However the distribution of matrix particles 14 will be essentially random in both the length and width dimensions.

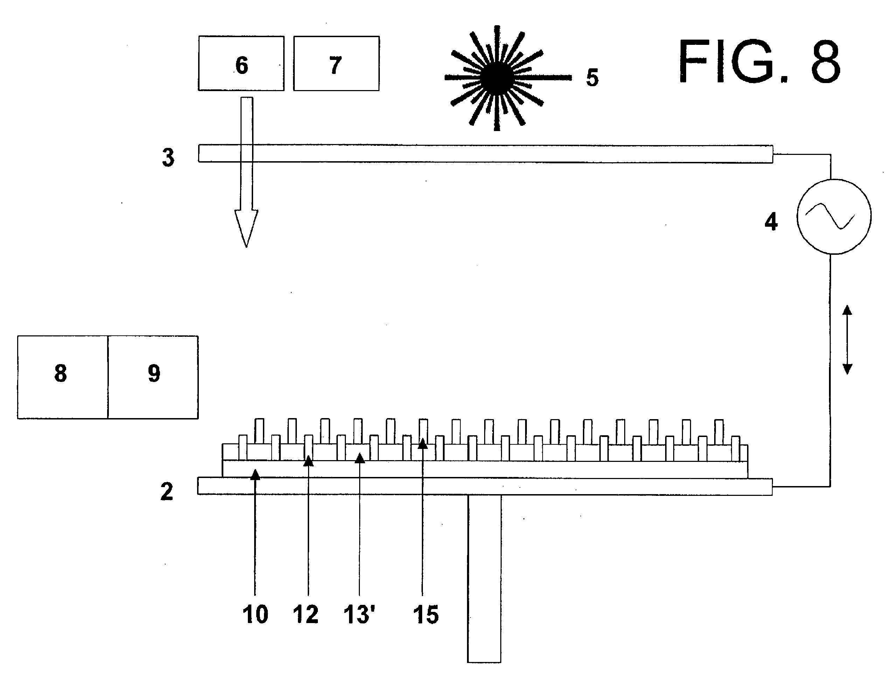

As shown in Figure 8, a second layer of nanofibres 15 is then grown, catalysed by the catalyst particles 14. Note that the second layer of nanofibres 15 partially overlaps with the previous layer of nanofibres 12. This results in "interlaminar" reinforcement as well as "intralaminar" reinforcement. Although the second layer is shown in Figure 8 with vertically extending nanofibres 15, in an alternative embodiment the second plasma source 3 may be moved relative to the platform 2 so that the nanofibres in the second layer are aligned in a different direction, for instance at an acute angle such as 45° to the vertical. The electromagnetic field may be re-oriented for each successive layer of nanofibres if desired. A transport mechanism (not shown) is provided to move the plasma source electrode 3 relative to the platform 2 into the position required. Equivalently, a mechanism (not shown) may be provided to move the platform 2, or rotate it, to give the desired angle of electro-magnetic field.

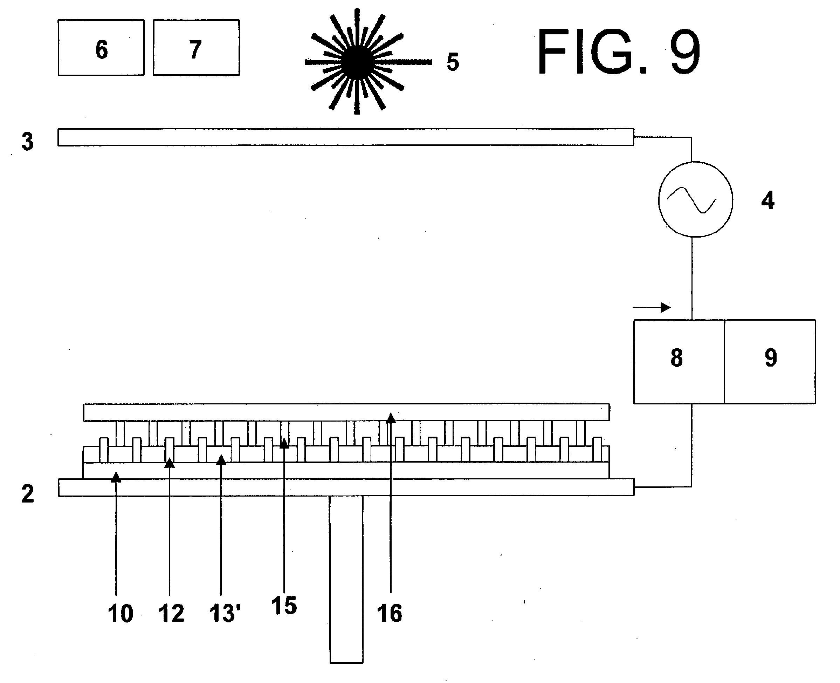

As shown in Figure 9, the negative plasma source 2 is lowered again and a further layer 16 of polymer powder deposited on top of the layer of nanofibres 15.

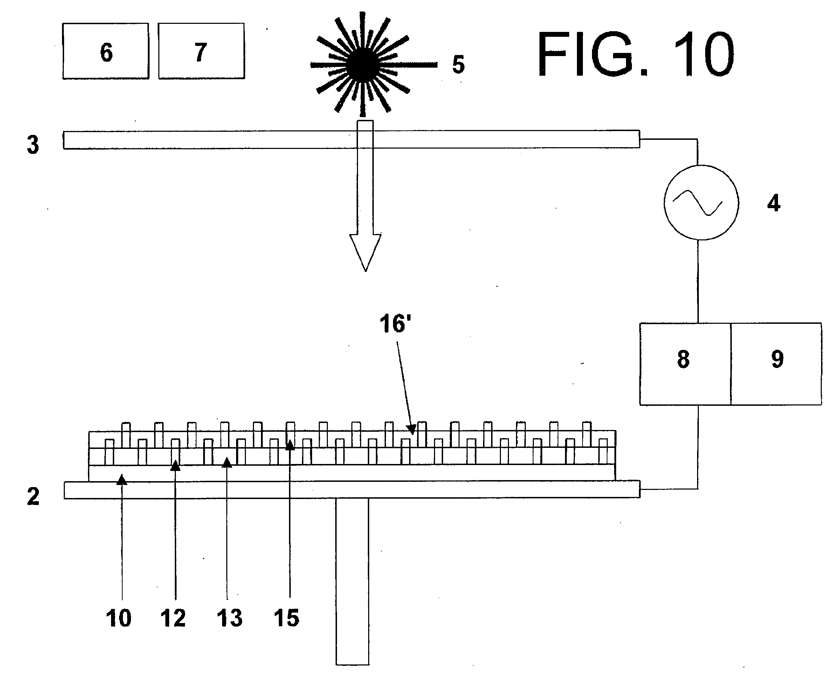

As shown in Figure 10, the layer 16 is then consolidated by the laser 5 to form a consolidated layer 16'.

The process is then repeated as required, with each layer of nanofibres being selectively impregnated to form a cross-section with a desired two-dimensional shape and size. Once the structure has been formed, unconsolidated powder is removed, leaving an element with a desired three dimensional shape.

In the embodiment described above, a respective layer of catalyst particles 11,14 is deposited for each layer of fibres. In an alternative embodiment, the layer of catalyst particles 11 may be re-used to catalyse a succession of layers of fibres which grow end-to-end, instead of growing as a succession of discrete fibres with the overlapping configuration shown in Figure 8.

Optionally the printing head 9 may be modulated selectively so as to deposit each layer of colloid drops with a desired shape and/or packing density. This enables each layer of nanotubes to be grown with a different shape and/or packing density. Optionally the packing density of the colloid drops (and hence the packing density of the nanotubes) may also vary across the layer (in the width and/or length direction) as well as varying between layers.

Instead of depositing the matrix powder with a hopper 8, the layers of matrix powder may be applied by a roller or other feed system which spreads the layer across the substrate.

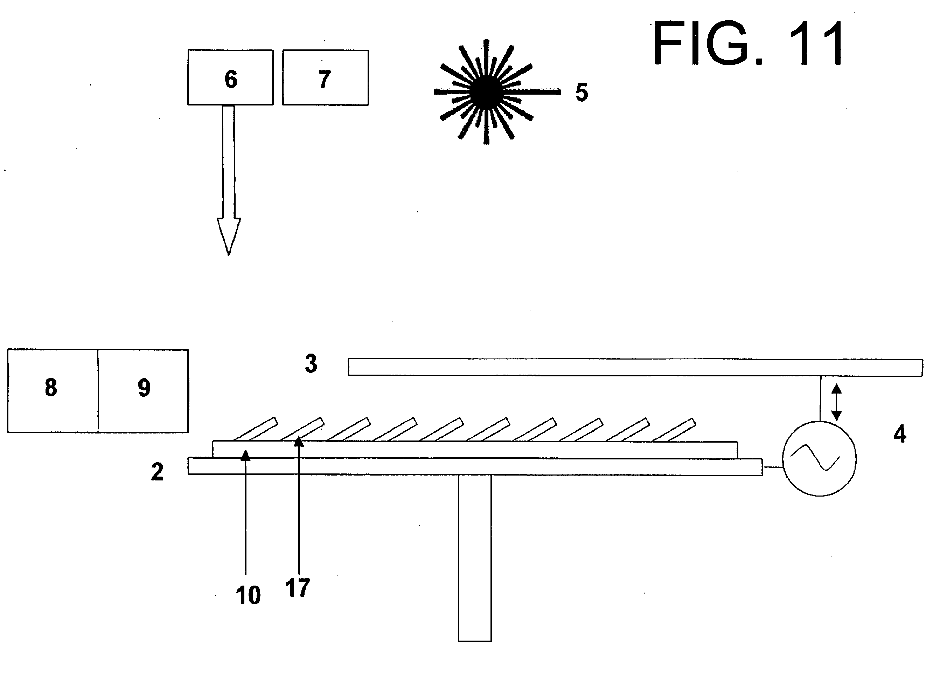

In the process shown in Figures 1-10, a bulk composite material is formed by depositing a series of layers of nanotubes, each layer being impregnated before growth of the next layer. In the alternative process shown in Figures 11-13, the same apparatus may be used to form a sheet with only a single layer of nanotubes.

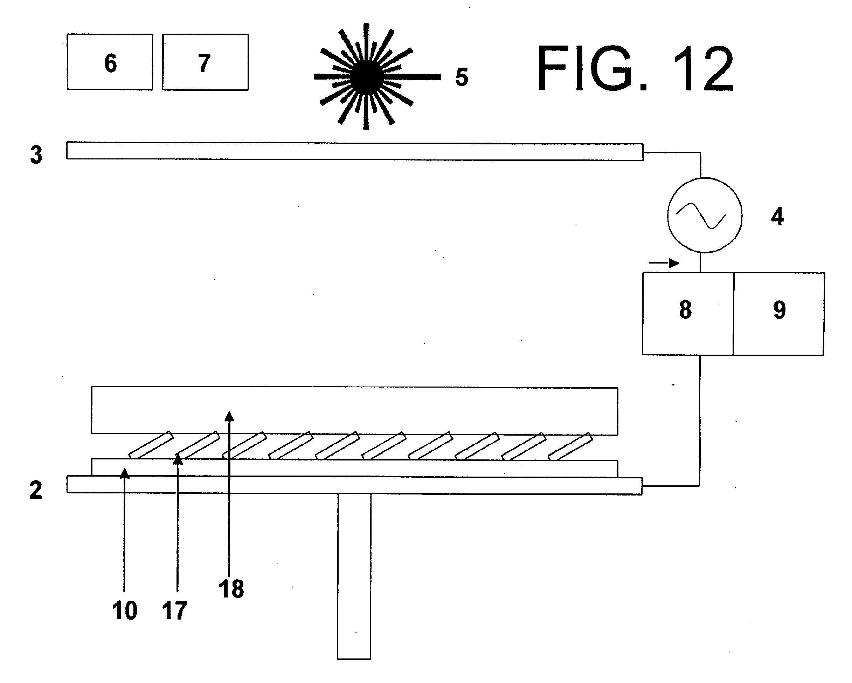

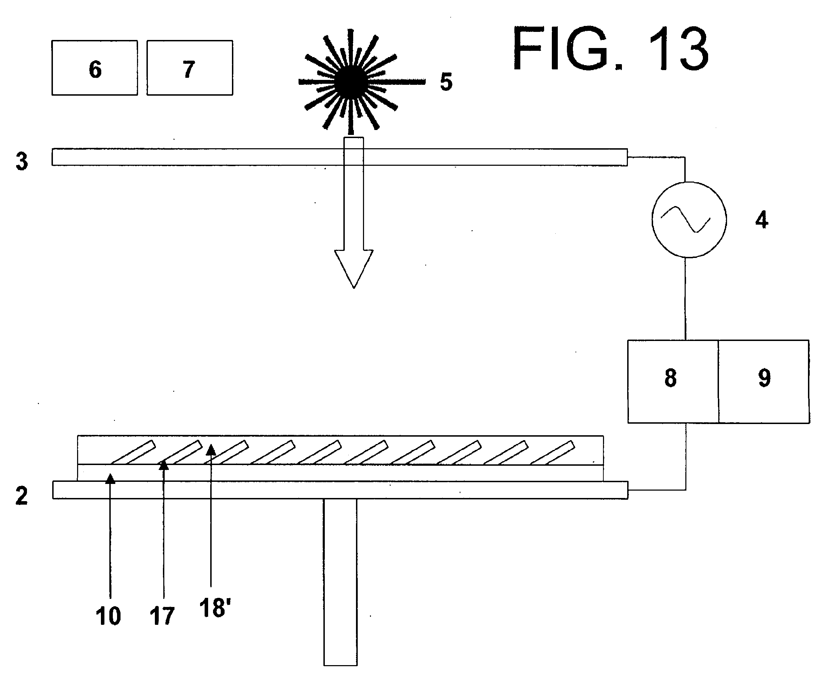

As shown in Figure 11, after depositing a layer of catalyst particles, a layer of nanotubes 17 is grown at an angle to the substrate matrix layer 10 by moving the positive plasma source 3 to the position shown. As shown in Figure 12, a layer of matrix 18 is then deposited, and consolidated to impregnate the layer of nanotubes 17 as shown in Figure 13. The resulting sheet is then removed from the process chamber, and can be used in the same manner as a conventional "prepreg". That is, a number of such sheets can be laid together to form a laminate structure, cut to shape and moulded to form a composite element.

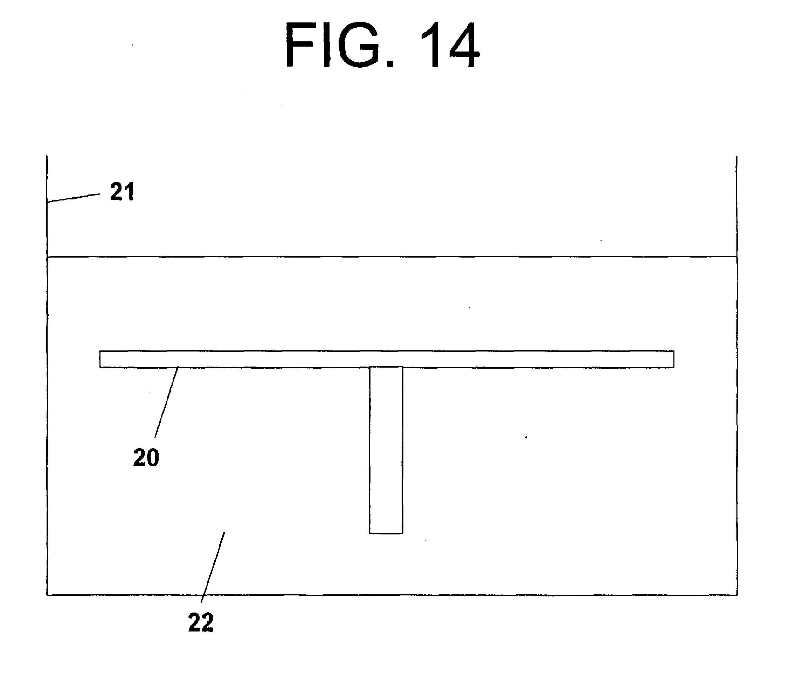

Figures 14-20 show an additive layer manufacturing system for manufacturing a composite with a thermosetting epoxy resin matrix (instead of the thermoplastic matrix used in the apparatus of Figures 1-13). The system shown in Figures 14-20 incorporates all of the elements of the system of Figure 1 (except the hopper 8) but these elements are not shown in Figures 14-20 for purposes of clarity.

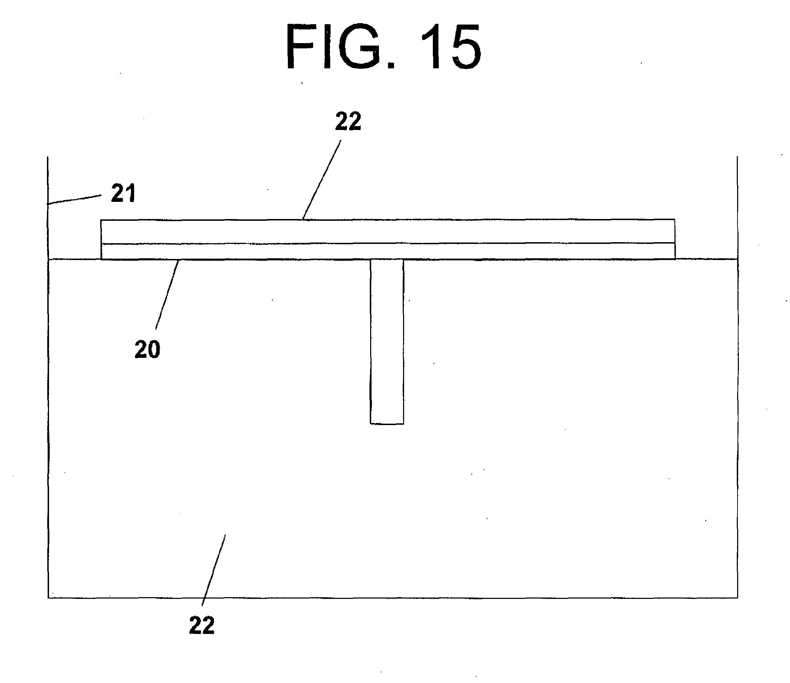

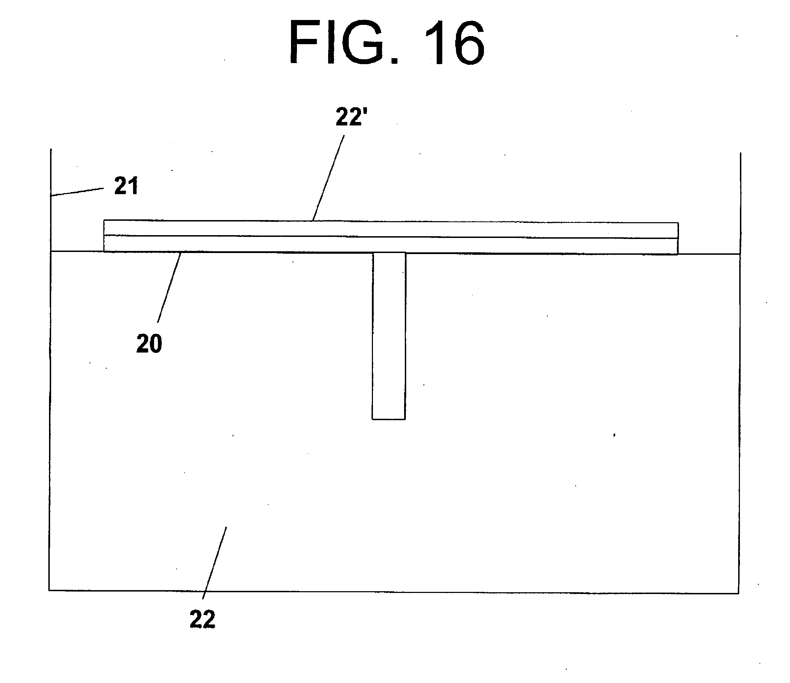

In a first process step shown in Figure 14, a platform 20 is immersed in a bath 21 of liquid epoxy resin 22. The platform is then lifted up to a position just above the surface of the bath 21 as shown in Figure 15 in which a mound 22 of resin is supported by the platform 20. A doctor blade (not shown) wipes across the mound 22 to leave a uniformly thick layer 22' of resin shown in Figure 16. A laser (not shown) is then turned on and scanned across the layer 22' to cause the resin to cure in a desired shape.

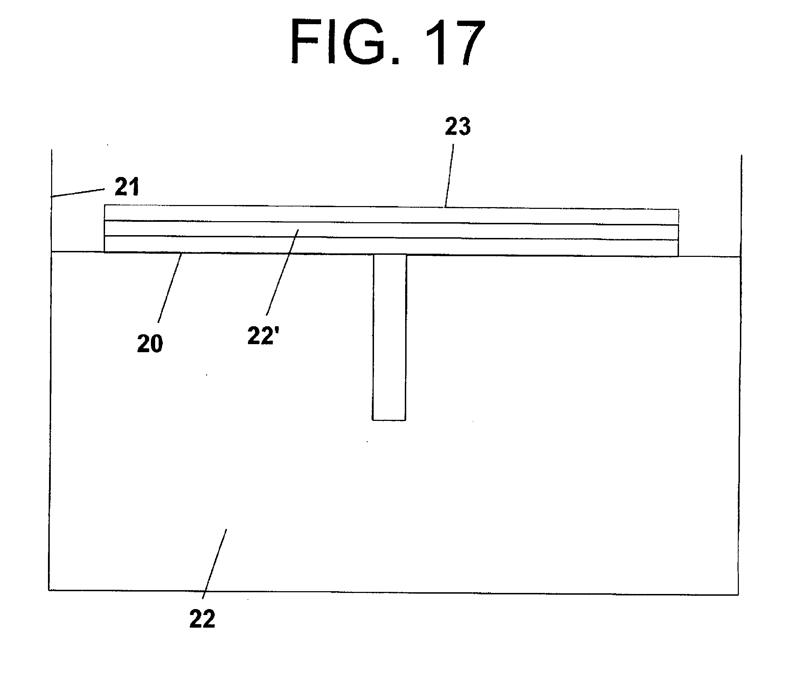

A printing head (not shown) is then moved across the layer 22' to deposit an array of catalyst particles (not shown). A carbonaceous feed stock is then introduced into the process chamber, and a plasma from a plasma source (not shown) is applied at an angle to the layer 22 to cause the growth of a layer of nanofibres 23, aligned with the direction of the electromagnetic field. An angle of 45° is shown in Figure 17, although this angle may be as low as 5° if required.

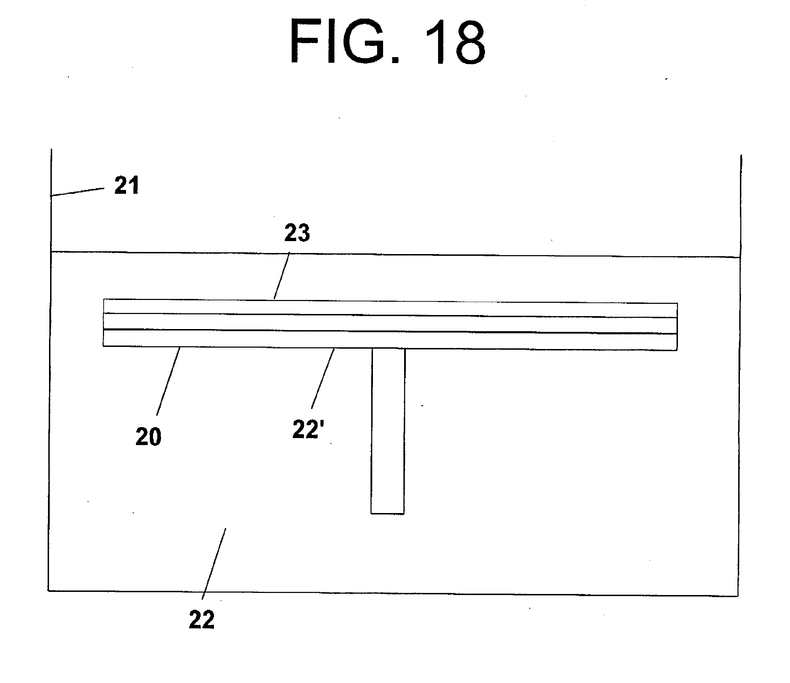

Once nanofibres 23 of a suitable length have been grown, the plasma power source and gas supply are turned off, inert gas in the chamber is purged, and the platform 20 is lowered as shown in Figure 18.

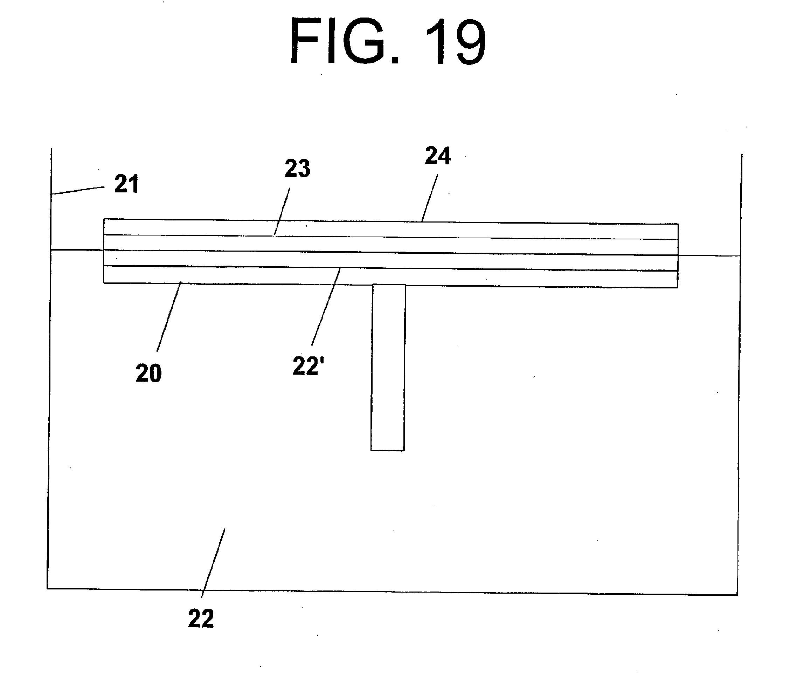

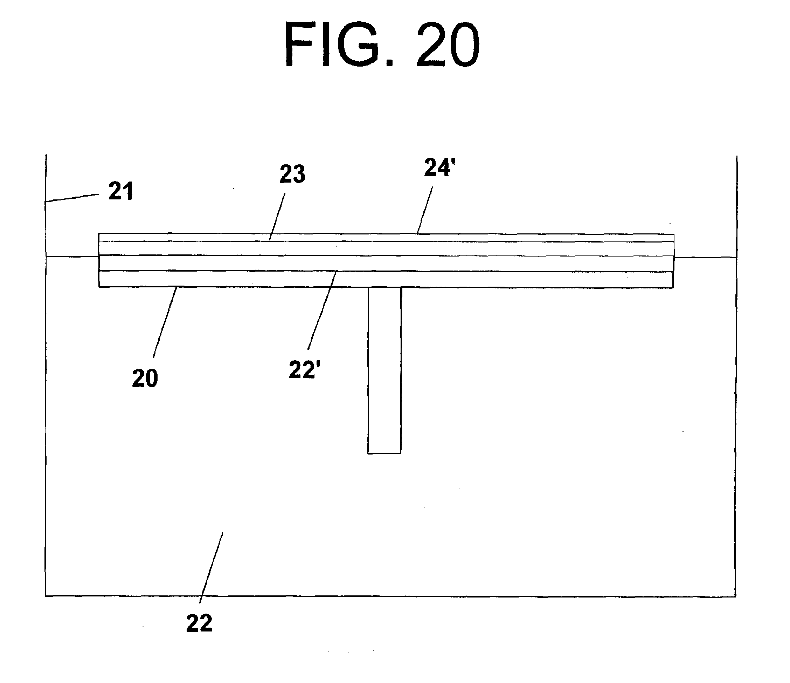

The platform 20 is then lifted up to the position just above the surface of the bath 21 shown in Figure 19 in which a mound 24 of resin impregnates the layer of nanofibres 23. The doctor blade then wipes across the mound 23 to form a uniformly thick layer 24' of resin shown in Figure 20. The laser is then turned on and scanned across the layer 24' to cause the resin to cure in a desired shape. Note that the layer 24' is shown in Figure 20 above the layer of nanofibres 23, but in practice the layer 24' may be made sufficiently thin such that after curing it only impregnates the matrix through a lower part of its thickness, in a similar manner to the layer 13' shown in Figure 6, thus giving partial overlap with the next layer of nanofibres.

The process is then be repeated further to form a bulk material.

It should be noted that Figures 1-20 are not to scale, and thus the relative dimensions of the various elements may vary significantly from those shown.

Although the invention has been described above with reference to one or more preferred embodiments, it will be appreciated that various changes or modifications may be made without departing from the scope of the invention as defined in the appended claims.

## Claims

1. A method of manufacturing a composite material, the method comprising:
growing a layer of reinforcement; and
impregnating the layer with a matrix; and
aligning the reinforcement layer by applying an electromagnetic field during growth of the reinforcement layer at an acute angle to the reinforcement layer.

2. The method of claim 1 further comprising forming a plasma during growth of the layer.

3. The method of any preceding claim further comprising forming a layer of catalyst particles to catalyse the growth of the reinforcement layer.

4. The method of claim 3 further comprising forming the layer of catalyst particles with a catalyst particle packing density which varies across the layer.

5. The method of any preceding claim further comprising growing the layer of reinforcement with a packing density which varies across the layer.

6. The method of any preceding claim comprising:
manufacturing two or more sheets of composite material by the method of any preceding claim;
laying the sheets together to form a laminate structure; and
moulding the laminate structure.

7. The method of any preceding claim further comprising heating the matrix during impregnation.

8. The method of claim 7 wherein the matrix is heated by a laser beam.

9. The method of claim 7 or 8 wherein the layer of reinforcement is impregnated by depositing a layer of matrix material on the layer of reinforcement; and heating at least part of the layer of matrix material.

10. The method of claim 9 wherein the layer of matrix material is a powder.

11. The method of any preceding claim wherein the reinforcement layer comprises reinforcement elements having an aspect ratio greater than 100.

12. The method of any preceding claim wherein the reinforcement layer comprises reinforcement elements having a diameter less than 100 nm.

13. The method of any preceding claim wherein the reinforcement layer comprises carbon fibres.

14. Apparatus for manufacturing a composite material, the apparatus comprising:
a system for growing a layer of reinforcement; and
an impregnation system for applying matrix material to the layer so as to impregnate each layer with the matrix material,
**characterised in that** the apparatus further comprises an electrode for applying an electromagnetic field at an acute angle to the reinforcement layer during growth of the reinforcement layer.

## Patentansprüche

1. Verfahren zur Herstellung eines Verbundmaterials, wobei das Verfahren enthält:
Aufwachsen einer Verstärkungsschicht und
Imprägnieren der Schicht mit einer Matrix und
Ausrichten der Verstärkungsschicht durch Anlegen eines elektromagnetischen Feldes während des Aufwachsens der Verstärkungsschicht in einem spitzen Winkel zur Verstärkungsschicht.

2. Verfahren nach Anspruch 1, ferner enthaltend das Bilden eines Plasmas während des Aufwachsens der Schicht.

3. Verfahren nach einem der vorigen Ansprüche, ferner enthaltend das Bilden einer Schicht von Katalysatorpartikeln, um das Aufwachsen der Verstärkungsschicht zu katalysieren.

4. Verfahren nach Anspruch 3, ferner enthaltend das Bilden der Schicht von Katalysatorpartikeln mit einer Katalysatorpartikelpackungsdichte, die über die Schicht hinweg schwankt.

5. Verfahren nach einem der vorigen Ansprüche, ferner enthaltend das Aufwachsen der Verstärkungsschicht mit einer Packungsdichte, die über die Schicht hinweg schwankt.

6. Verfahren nach einem der vorigen Ansprüche, enthaltend:
Herstellen zweier oder mehrerer Lagen von Verbundmaterial durch das Verfahren nach einem der vorherigen Ansprüche,
Zusammenlegen der Lagen, um eine Laminatstruktur zu bilden, und
Formgebung der Laminatstruktur.

7. Verfahren nach einem der vorigen Ansprüche, ferner enthaltend das Erwärmen der Matrix während des Imprägnierens.

8. Verfahren nach Anspruch 7, bei dem die Matrix durch einen Laserstrahl erwärmt wird.

9. Verfahren nach Anspruch 7 oder 8, bei dem die Verstärkungsschicht durch Abscheiden einer Matrixmaterialschicht auf der Verstärkungsschicht und Erwärmen wenigstens eines Teils der Matrixmaterialschicht imprägniert wird.

10. Verfahren nach Anspruch 9, bei dem die Matrixmaterialschicht ein Pulver ist.

11. Verfahren nach einem der vorigen Ansprüche, bei dem die Verstärkungsschicht Verstärkungselemente enthält, die ein Längenverhältnis größer als 100 aufweisen.

12. Verfahren nach einem der vorigen Ansprüche, bei dem die Verstärkungsschicht Verstärkungselemente enthält, die einen Durchmesser kleiner 100 nm aufweisen.

13. Verfahren nach einem der vorigen Ansprüche, bei dem die Verstärkungselemente Kohlenstofffasern enthalten

14. Vorrichtung zur Herstellung eines Verbundmaterials, wobei die Vorrichtung enthält:
ein System zum Aufwachsen einer Verstärkungsschicht und
ein Imprägnierungssystem zum Applizieren eines Matrixmaterials auf der Schicht, so dass jede Schicht mit dem Matrixmaterial imprägniert wird,
**dadurch gekennzeichnet, dass** das Gerät ferner eine Elektrode zum Anlegen eines elektromagnetischen Feldes in einem spitzen Winkel zur Verstärkungsschicht während des Aufwachsens der Verstärkungsschicht enthält.

## Revendications

1. Procédé de production d'un matériau composite, le procédé comprenant les étapes consistant à :
faire croître une couche de renforcement ; et
imprégner la couche avec une matrice ; et
aligner la couche de renforcement en appliquant un champ électromagnétique pendant la croissance de la couche de renforcement à un angle aigu par rapport à la couche de renforcement.

2. Procédé selon la revendication 1 comprenant en outre l'étape consistant à former un plasma pendant la croissance de la couche.

3. Procédé selon l'une quelconque des revendications précédentes, comprenant l'étape consistant à former une couche de particules catalytiques pour catalyser la croissance de la couche de renforcement.

4. Procédé selon la revendication 3, comprenant en outre l'étape consistant à former une couche de particules catalytiques avec une densité de garnissage des particules catalytiques qui varie à travers la couche.

5. Procédé selon l'une quelconque des revendications précédentes, comprenant en outre l'étape consistant à faire croître la couche de renforcement avec une densité de garnissage qui varie à travers la couche.

6. Procédé selon l'une quelconque des revendications précédentes, comprenant les étapes consistant à :
produire deux feuilles de matériau composite ou plus par le procédé selon l'une quelconque des revendications précédentes ;
assembler les feuilles pour former une structure de stratifié ; et
mouler la structure de stratifié.

7. Procédé selon l'une quelconque des revendications précédentes, comprenant en outre l'étape consistant à chauffer la matrice pendant l'imprégnation.

8. Procédé selon la revendication 7, dans lequel la matrice est chauffée par un faisceau laser.

9. Procédé selon la revendication 7 ou 8, dans lequel la couche de renforcement est imprégnée par dépôt d'une couche de matrice sur la couche de renforcement ; et chauffage d'au moins une partie de la couche de matrice.

10. Procédé selon la revendication 9, dans lequel la couche de matrice est une poudre.

11. Procédé selon l'une quelconque des revendications précédentes, dans lequel la couche de matrice comprend des éléments de renforcement ayant un rapport de côté supérieur à 100.

12. Procédé selon l'une quelconque des revendications précédentes, dans lequel la couche de renforcement comprend des éléments de renforcement ayant un diamètre inférieur à 100 nm.

13. Procédé selon l'une quelconque des revendications précédentes, dans lequel la couche de renforcement comprend des fibres de carbone.

14. Appareil de production d'un matériau composite, l'appareil comprenant :
un système permettant de faire croître une couche de renforcement ; et
un système d'imprégnation permettant d'appliquer la matrice à la couche afin d'imprégner chaque couche avec la matrice,
**caractérisé en ce que** l'appareil comprend en outre une électrode pour appliquer un champ électromagnétique à un angle aigu par rapport à la couche de renforcement pendant la croissance de la couche de renforcement.
